**Europäisches Patentamt**

(19) **European Patent Office**

**Office européen des brevets**

(11) Veröffentlichungsnummer: **0 023 625**
**B1**

(12) **EUROPÄISCHE PATENTSCHRIFT**

(45) Veröffentlichungstag der Patentschrift:
01.02.84

(21) Anmeldenummer: **80104130.2**

(22) Anmeldetag: **16.07.80**

(51) Int. Cl.³· **G 08 B 13/24**

(54) **Alarmsystem zur Feststellung des Eindringens eines sich bewegenden Objektes in den Umgebungsbereich eines zu schützenden Objektes.**

㉚ Priorität. **18.07.79 DE 2929007**

(43) Veröffentlichungstag der Anmeldung:
**11.02.81 Patentblatt 81/6**

(45) Bekanntmachung des Hinweises auf die Patenterteilung.
**01.02.84 Patentblatt 84/5**

(84) Benannte Vertragsstaaten:
**CH FR GB LI**

(56) Entgegenhaltungen:
**US - A - 3 474 400**
**US - A - 3 727 216**
**US - A - 4 054 871**

**ELECTRONICS, Band 42, Nr. 26, 22. Dezember 1969,
Seite 170 Albany, N.Y. "Flash Gunn"**

(73) Patentinhaber: **DORNIER SYSTEM GmbH,
Postfach 1360, D-7990 Friedrichshafen (DE)**

(72) Erfinder: **Knepper, Udo, Dipl.-Ing., Amselweg 2,
D-7994 Langenargen (DE)**

(74) Vertreter: **Landsmann. Ralf, Dipl.-Ing., Kleeweg 3,
D-7990 Friedrichshafen 1 (DE)**

Alarmsystem zur Feststellung des Eindringens eines sich bewegenden Objektes
in den Umgebungsbereich eines zu schützenden Objektes

Die Erfindung betrifft ein Alarmsystem zur Feststellung des Eindringens eines sich bewegenden Objektes in den Umgebungsbereich eines zu schützenden Objektes mit einem elektromagnetische Energie abstrahlenden Sender und einem Empfänger zur Aufnahme der vom eindringenden Objekt reflektierten elektromagnetischen Energie.

Unter Objektschutz versteht man die Sicherung von kleineren oder größeren Gegenständen und Anlagen gegenüber unbefugtem Zugriff bzw. unbefugtem Eindringen oder Betreten eines Raumes, in dem sich Gegenstände oder Personen befinden, die geschützt werden sollen. Die Sicherung soll dabei im vorliegenden Fall nicht durch Zäune, Gitter oder Bewachungspersonen erfolgen, wenngleich diese Einrichtungen zusätzlich vorhanden sein können, sondern die Sicherung soll eine Alarmauslösung an einem normalerweise räumlich entfernten Ort bewirken.

Bekannt sind Alarmauslösevorrichtungen dieser Art, die nach folgenden Prinzipien arbeiten:

Zur Sicherung der Objekte mittels Licht- oder Infrarotschranken, Mikrowellenschranken, Ultraschallschranken und dergleichen. Diese Einrichtungen bestehen aus einer Strahlungsquelle, die einen gebündelten Strahl in Richtung auf einen Empfänger aussendet. Die Alarmgabe erfolgt bei Unterbrechung bzw. Dämpfung des Strahles durch einen Eindringling. Innerhalb der Schranken wird keine Bewegung detektiert, so daß in diesem Bereich z. B. Wachpersonal oder andere Berechtigte sich ungestört bewegen können.

Neben diesen Schrankenverfahren sind Rückstrahlverfahren für die o. a. Wellenarten bekannt, die unter Ausnutzung des Dopplerverfahrens arbeiten. Hierbei wird der zu sichernde Raum von der Strahlungsquelle ausgeleuchtet und die von den vorhandenen Hindernissen reflektierte Strahlung in einer Empfangseinrichtung empfangen. Ein sich bewegender Eindringling erzeugt im Empfänger ein Echosignal, das gegenüber den Echos von ortsfesten Hindernissen oder Zielen um den Dopplerfrequenzbetrag verschieden ist. Dieses dopplerfrequenzverschobene Signal läßt sich mittels an sich bekannter Verfahren auswerten. Da hier der gesamte zu sichernde Raum ausgeleuchtet wird, werden sämtliche Bewegungen in diesem Raum erfaßt und führen zur Alarmauslösung. Es ist bei diesem Verfahren also nicht mehr möglich, Berechtigte von unbefugten Eindringlingen auszusondern und einen Alarm nur beim Eindringen von unerwünschten und nicht berechtigten Objekten auszulösen.

Eine störende Eigenschaft dieser Rückstrahlverfahren besteht darin, daß die Reichweite der Sender im allgemeinen über den zu sichernden Bereich hinausgeht und somit auch von eventuell weit außerhalb des betreffenden Raumes befindlichen Zielen Echosignale reflektiert werden.

Daher können unter Umständen größere bewegte Ziele außerhalb des zu sichernden Raumes ein so starkes Echosignal hervorrufen, daß es im Empfänger zur Auslösung eines Fehlalarms kommt.

Die Nachteile der hierfür zur Objektsicherung verwendeten cw-Radar-Sensoren bestehen — wie oben schon erwähnt — darin, daß diese keine Fähigkeit besitzen, kleine Bewegtziele in geringer Entfernung von großen Bewegtzielen in großer Entfernung zu unterscheiden. Beispielsweise können die nachfolgend aufgezählten Eindringlinge etwa gleich große Echosignale am Empfänger erzeugen:

Ein Stück Flug- oder Niederwild (oder sogar ein Schmetterling) in unmittelbarer Antennennähe,
ein geduckt schleichender Mensch im mittleren bis maximalen Entfernungsbereich,
ein fahrender LKW in großer Entfernung, die außerhalb des Soll-Erfassungsbereichs liegen kann.

Eine Weiterbildung der genannten Rückstrahlverfahren ist aus der Zeitschrift »Electronics« vom 22. Dez. 1969, Seite 170, bekannt. Bei dem dort beschriebenen Gerät werden gepulste, elektromagnetische Signale abgestrahlt und durch ein Zeitfenster werden nur solche von einem Ziel reflektierte Empfangssignale durchgelassen, die aus einem diesem Zeitfenster zugeordneten Entfernungsbereich kommen. Dieser Entfernungsbereich kann z. B. durch Umschaltung des Zeitfensters je nach Erfordernis eingestellt werden. Auf diese Weise werden die oben aufgezählten Nachteile der cw-Radar-Sensoren vermieden und Ziele, die näher liegen oder weiter entfernt sind als dem eingestellten Entfernungsbereich entspricht, werden nicht erfaßt. Die Strahlung des Gerätes ist gerichtet und somit wird nur ein auch seitlich ganz begrenzter Abschnitt des eingestellten Entfernungsbereiches überwacht. Nach den in der Literaturstelle enthaltenen Angaben ist es z. B. möglich, in einer mittleren Entfernung von 200 m nur eine Fläche von etwa 35 m Breite und 50 m Tiefe zu überwachen. Ein in diesem Raum sich bewegendes Ziel wird erfaßt und erzeugt einen Dopplerton entsprechend seiner radialen Geschwindigkeit. Der Dopplerton soll gemäß der genannten Literaturstelle einer Beobachtungsperson im Kopfhörer wahrnehmbar gemacht werden. Da aber die entstehenden Dopplerfrequenzen außerordentlich niedrig sind, ist im Kopfhörer bestenfalls ein dumpfes Geräusch zu vernehmen, wenn ein Mensch sich in normaler Weise bewegt. Zur Erfassung eines sich langsam anschleichenden oder kriechenden Eindringlings ist dieses Gerät nicht geeignet. Diese Nutzsignale sind von Störsignalen durch sich im Wind bewegende Vegetation kaum zu unterscheiden, weil die Dopplersignale im selben niedrigen Frequenzbereich liegen.

Ein weiterer Nachteil des oben beschriebenen Gerätes liegt darin, daß mit den gewonnenen Nutzsignalen eine automatische Alarmauslösung bei unbemannten Beobachtungs- und Überwachungsgeräten nicht möglich ist. Ferner ist es nachteilig, daß eine ständige Rundumsicherung bzw. Rundumüberwachung nicht möglich ist.

Ausgehend von dem obengenannten Alarmsystem mit einem gepulste elektromagnetische Wellensignale abstrahlenden Sender und einem Empfänger zur Aufnahme der vom eindringenden Objekt reflektierten elektromagnetischen Energie, mit einem gegenüber den Sendeimpulsen zeitverzögerten Zeitfenster und Auswertung der vom Zeitfenster durchgelassenen Bewegtzielsignale zwecks Bildung einer im gewünschten Entfernungsbereich schalenförmig das zu schützende Objekt umgebenden, radial begrenzten Alarmzone, wobei die Tiefe der Alarmzone gering ist im Vergleich zum Entfernungsbereich, besteht die Aufgabe der Erfindung darin, eine Vorrichtung für Objektschutz zu schaffen, die mit deutlicher Entfernungsbegrenzung eine automatische Rundumüberwachung eines zu sichernden Raumes ermöglicht, wobei eine ausreichend entfernungsunabhängige Echostärke eines Eindringlings sichergestellt ist und auch ein sich sehr langsam mit radialer Richtungskomponente bewegender Eindringling feststellbar ist.

Diese Aufgabe wird erfindungsgemäß gelöst durch Ermittlung des von einem Eindringling innerhalb der Alarmzone tatsächlich zurückgelegten Radialweges aus der Differenz der Zahlenwerte von aufsummierten positiven und negativen Dopplersignalperioden der reflektierten Bewegtzielsignale.

Der Vorteil des Alarmsystems liegt darin, daß keinerlei »Pfosten« für die Montage von Sender oder Empfänger erforderlich sind wie bei den vorstehend genannten »Schrankenverfahren«, aus deren Stellung Rückschlüsse auf das Vorhandensein und die genaue Lage der Schranken gezogen werden können. Außerdem ist keine Verkabelung der Zuleitungen zu den Sendern bzw. Empfängern der Schranken nötig, vielmehr läßt sich das Alarmsystem leicht und kompakt aufbauen, so daß es mobil und gegebenenfalls tragbar und somit ohne Vorbereitung überall einsetzbar ist.

Als Vorteil gegenüber dem bisher bekannten »Rückstrahlverfahren« ist die mit wählbarer Entfernungseinstellung rund um den zu sichernden Bereich gelegte geschlossene Alarmzone von genau zu bestimmender Tiefe zu nennen.

Bei dem erfindungsgemäßen Alarmsystem ist die Zonentiefe klein gegen die mittlere radiale Entfernung der Zone, z. B. im Verhältnis 1 : 10. Daraus ergibt sich der Vorteil, daß die von der Zielentfernung abhängige Doppler-Amplitude sich innerhalb der Alarmzonentiefe nur geringfügig ändert. Auf diese Weise ist es ohne gerätetechnischen Zusatzaufwand (z. B.

STC = sensitivity time control) möglich, die Doppler-Amplitude als ein Maß für die Größe des erfaßten Zieles heranzuziehen. Im Gegensatz zu den bekannten cw-Doppler-Radaranlagen kann jetzt für jeden eingestellten Entfernungsbereich zwischen unerwünschten Kleinzielen (z. B. Vögeln) und einem gefährlichen Eindringling unterschieden werden.

Zur Bildung der von den Bewegtzielen erzeugten Dopplersignale wird vorteilhafterweise ein Abtast- und Haltekreis eingesetzt. Prinzipiell kann jede gewonnene Dopplergröße wie Doppler-Amplitude, Doppler-Frequenz oder Doppler-Periodenzahl ausgewertet werden. Erfindungsgemäß wird vorteilhafterweise die Doppler-Periodenzahl als Alarmkriterium herangezogen. Die Doppler-Periodenzahl ist unabhängig von der radialen Entfernung und von der Zielgröße ein Maß für den innerhalb der Alarmzone zurückgelegten Radialweg eines in der Alarmzone sich bewegenden Objektes. Ihre Messung kann in an sich bekannter Weise durchgeführt werden. Die Dopplerperiodenzahl ergibt eine klare Angabe, wie weit ein Eindringling tatsächlich in die Alarmzone eingedrungen ist, und zwar unabhängig davon, ob der Eindringling sich direkt auf das zu schützende Objekt hin bewegt oder ob er mehr oder weniger schräg die Alarmzone durchdringen will. Eine derartige Auswertung der Dopplerperiodenzahl setzt jedoch voraus, daß in an sich bekannter Weise das positive und das negative Dopplerfrequenzsignal getrennt gewonnen wird. So ist eine Unterscheidung zwischen einem sich nähernden bzw. einem sich entfernenden Eindringling möglich. Aus der Differenz der Zahlenwerte von aufsummierten positiven und negativen Dopplersignalperioden läßt sich der tatsächlich zurückgelegte radiale Eindringweg innerhalb der Alarmzone ermitteln. Das Vorzeichen der Differenz gibt die Richtung an. Auf einfache Weise läßt sich für den Eindringweg ein Schwellwert vorgeben und einstellen. Sobald der Differenzbetrag einen Mindestwert für den positiven Eindringweg, d. h. für eine Annäherung, aufweist, liegt ein Kriterium für Alarmauslösung vor. Ein streifendes Tangieren und Wiederverlassen der Alarmzone führt dabei nicht zu einem Alarm. Für die Aufsummierung bzw. Differenzbildung ist es vorteilhaft, eine bestimmte Beobachtungsdauer festzulegen. Hierfür kann man in bekannter Weise z. B. einen gleitenden Zählzeitraum vorsehen, dessen Dauer je nach den Erfordernissen einstellbar ist.

Zusätzlich zur Dopplerperiodenzahl als wichtigstem Kriterium können auch die anderen obengenannten Dopplergrößen einzeln oder in Kombination sinnvoll ausgewertet werden. So ist es etwa angezeigt, die Dopplerfrequenz zur Ermittlung der Eindringgeschwindigkeit heranzuziehen und z. B. durch Filterung einen oberen und unteren Grenzwert für die Dopplerfrequenz, d. h. für die Eindringgeschwindigkeit, festzulegen. Hierdurch wird zugleich eine Verbesserung des Signal-zu-Störabstandes erreicht.

Die Doppleramplitude ist abhängig von der Zielgröße. Auch für sie läßt sich ein Schwellwert festlegen und somit eine Unterscheidung zwischen großen und kleinen eindringenden Objekten durchführen. Fehlalarme durch unerwünschte Kleinziele werden so vermindert. Je nach der radialen Entfernung der Alarmzonen kann der Schwellwert für die Zielgröße unterschiedlich festgelegt werden. Durch Kombination der verschiedenen ausgewerteten Dopplergrößen und durch sinnvolle Wahl der jeweiligen Schwellwerte können je nach den örtlichen Gegebenheiten und den Erfordernissen die Kriterien für eine Alarmauslösung festgelegt werden. Für Eindringgeschwindigkeit und Zielgröße können dabei weite Grenzen zugelassen werden.

Die durch die sehr niedrigen Dopplerfrequenzen bei den bekannten Geräten bedingten Nachteile bei der rein akustischen Ermittlung einer Eindringgeschwindigkeit sind damit umgangen, wobei das Alarmkriterium durch die persönliche Interpretation einer Beobachtungsperson gewonnen werden müßte. Durch die beschriebene Methode der Auswertung der Dopplerperiodenzahl bzw. des radialen Eindringwegs kann außerdem das zu erfassende Bewegtziel von Störsignalen unterschieden werden, die durch bewegte Vegetation hervorgerufen sind. Die so durchgeführte Zielselektion erlaubt mit relativ einfachen Mitteln eine automatische Alarmauslösung.

Bei Verwendung einer Antenne mit Rundstrahlcharakteristik können kugelschalenartige Alarmzonen gebildet werden. Durch Wahl einer anderen Antennencharakteristik kann aber auch eine seitliche oder Höhenbegrenzung der Alarmzone erreicht werden.

Die Höhenbegrenzung ergibt somit eine Alarmzone in der Art eines unsichtbaren Zaunes. Gemäß vorteilhafter Weiterbildung der Erfindung kann die Form bzw. der Grundriß der Alarmzone wahlweise durch programmierbare Steuerung der Verzögerungszeit des Zeitfensters für die zugeordneten Abstrahlrichtungen der Antenne eingestellt und den örtlichen Gegebenheiten angepaßt werden. Eine vorteilhafte praktische Möglichkeit hierfür ergibt sich bei der Verwendung einer rotierenden Richtantenne.

Ausführungsbeispiele der Erfindung seien nachstehend anhand der Zeichnung erläutert. Es zeigt

Fig. 1 die Lage einer Alarmzone im Grundriß,
Fig. 2 die Lage einer Alarmzone im Seitenriß,
Fig. 3 ein Blockschaltbild des Alarmsystems,
Fig. 4 Impulszüge von Sende- und Empfangssignalen an verschiedenen Stellen innerhalb des Blockschaltbildes,
Fig. 5 Formen von ausgewerteten Signalen,
Fig. 6 eine weitere Abwandlung des Prinzips mit zwei gestaffelt ineinanderliegenden Alarmzonen,
Fig. 7a und 7b eine Abwandlung des Prinzips mit zwei sich teilweise überschneidenden Alarmzonen in Grund- und Seitenriß und

Fig. 8 eine Abwandlung mit Überlagerung mehrerer gestaffelt angeordneter Alarmzonen.

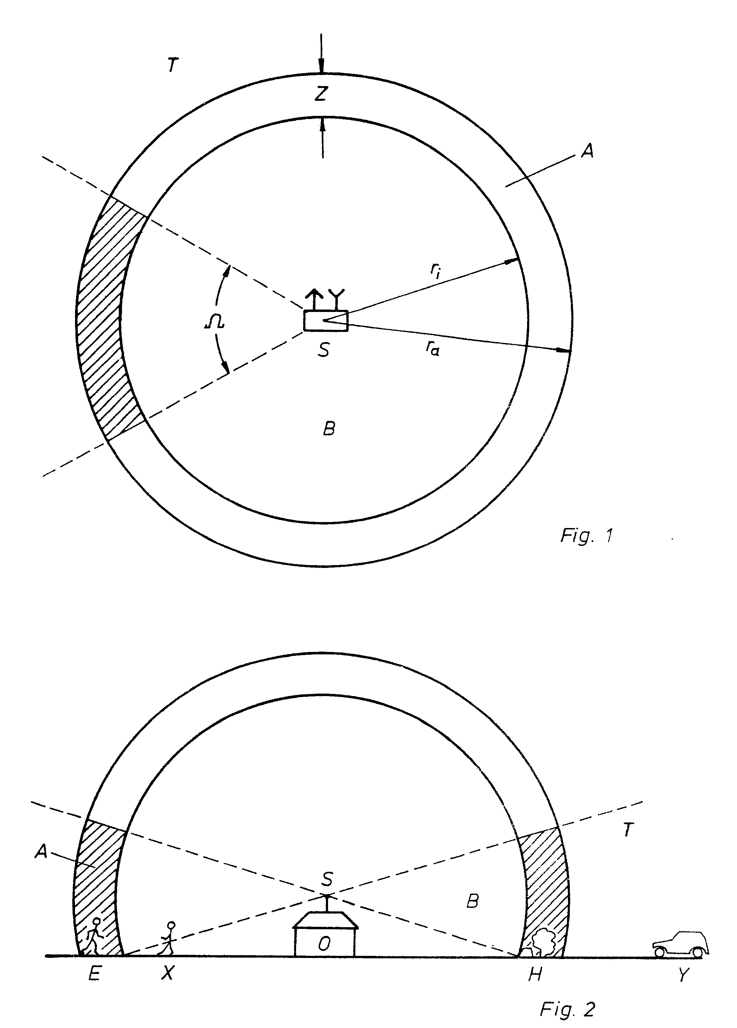

Zunächst sei die aus der eingangs genannten Literaturstelle »Electronics« bekannte prinzipielle Wirkungsweise der Erfindung anhand der Fig. 1 und 2 nochmals kurz erläutert. Ein Sensor S mit Sende- und Empfangseinrichtung erzeugt Impulse von bestimmter Dauer $t_p$ und bestimmter Pulswiederholfrequenz $f_r$. Mit diesen Impulsen wird ein Mikrowellensender getastet und die trägerfrequenten Impulse von der Sendeantenne abgestrahlt. Die abgestrahlten Signale werden von evtl. vorhandenen Zielen, Hindernissen oder anderen Objekten reflektiert und im Empfänger wieder aufgenommen. In ebenfalls an sich bekannter Weise wird im Empfänger nach einer wählbaren Verzögerungszeit $t_v$ ein Empfangsfenster geöffnet und nach einer einstellbaren Öffnungsdauer $t_o$ wieder geschlossen. Nur während der Öffnungsdauer des Zeitfensters können reflektierte Signale vom Empfänger aufgenommen und der Auswertung zugeleitet werden.

Durch Wahl der Verzögerungszeit $t_v$ kann also die mittlere radiale Entfernung der Alarmzone A eingestellt werden. An einem praktischen Beispiel kann ersehen werden, daß eine Verzögerungszeit $t_v$ von 333 nsec einen Radius von 50 m ergibt. Die radiale Tiefe Z der Alarmzone A ergibt sich aus der Öffnungsdauer $t_o$ des Zeitfensters mit etwa

$$Z \approx \frac{t_o + t_p}{2} \cdot c.$$

Somit ist auch die radiale Tiefe Z der Alarmzone allein durch Veränderung der Öffnungszeit $t_o$ nach Bedarf einstellbar, z. B. bei einer Dauer von

$$t_o = 10 \text{ nsec und } t_p = 10 \text{ nsec}$$

ergibt sich eine Alarmzonentiefe $Z \approx 3$ m.

Hier im Beispiel ist im Gegensatz zu dem in der genannten Literaturstelle beschriebenen Gerät eine Antenne mit Rundstrahlcharakteristik angenommen. Bei Verwendung einer Rundstrahlantenne in Fig. 1 und 2 ergibt sich eine kugelschalenartige Alarmzone A rund um das zu schützende Objekt O herum. Innerhalb der Alarmzone A befindet sich der geschützte Bereich B und außerhalb die Totzone T. Die radiale Begrenzung der Alarmzone ist durch einen äußeren Radius $r_a$ und einem inneren Radius $r_i$ gegeben, die beide von der Verzögerungszeit $t_v$ und der Öffnungsdauer $t_o$ des Zeitfensters abhängig sind. Durch Änderung der Antennenausbildung können — wie bereits angedeutet — andere Formen der schalenartigen Alarmzonen gebildet werden. Fig. 2 zeigt eine Höhenbegrenzung der Alarmzone A auf den schraffierten Bereich. Die hierzu erforderliche Antenne mit azimutaler Rundstrahlcharakteristik und vertikaler Bündelung ist bekannt und leicht zu realisieren. Auf diese Weise ist es möglich, eine geschlossene ringförmige Alarmzone von bestimmter Höhe zu erzeugen, was sich auf die Energiebilanz günstig auswirkt. Grundsätzlich werden in an sich bekannter Weise Festziel-Echos unterdrückt und nur die reflektierten Signale von Bewegtzielen ausgewertet. Auf diese Weise wird etwa durch das in der Fig. 2 in der Alarmzone A eindringende Bewegtziel E ein Alarm ausgelöst, wogegen ein etwa in der Alarmzone befindlicher großer Stein oder ein Strauch als Hindernis H nicht zur Auswertung kommen. Auch ein etwa im Raume des gesicherten Bereiches B innerhalb der Alarmzone A sich befindliches bewegliches Ziel X oder ein außerhalb der Alarmzone A in der Totzone T sich bewegendes Ziel Y lösen wegen der eindeutigen Begrenzung des Entfernungsbereiches keinen Alarm aus. Durchgeführte Versuche ergaben, daß durch die Entfernungsbegrenzung bei einem Alarmzonenradius von etwa 50 m ein dicht hinter der Alarmzone in der Totzone T bewegtes großes Objekt Y, wie z. B. ein LKW, keinen Fehlalarm auslöste, daß aber ein in die Alarmzone A hineinrollender Ball sofort festgestellt wurde. Wie ersichtlich, sind keine besonderen Maßnahmen erforderlich, um selbst größte Bewegtziele unmittelbar außerhalb der Alarmzone zuverlässig auszublenden.

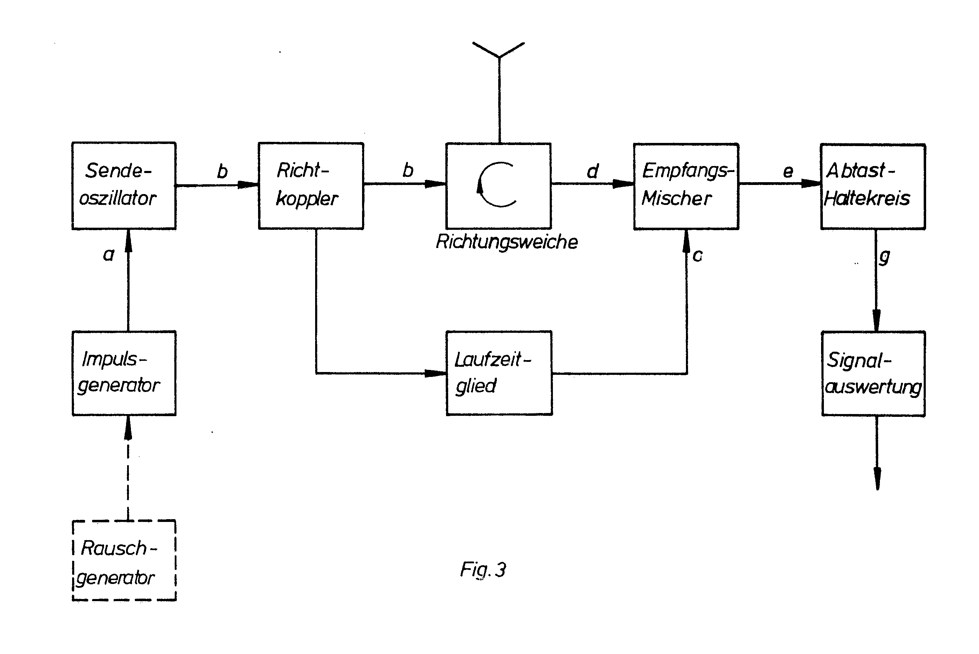

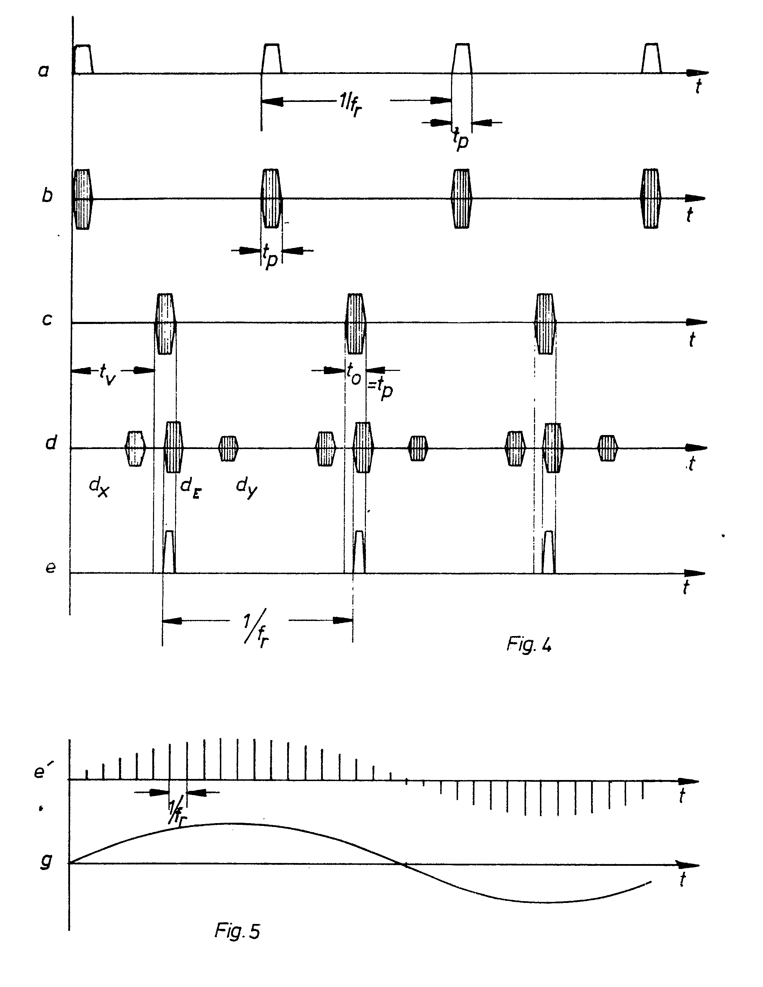

Nach dieser allgemeinen Übersicht sei nun der Aufbau und die Wirkungsweise des Alarmsystems anhand der Fig. 3 bis 5 näher erläutert. Die Fig. 3 zeigt ein einfaches Blockschaltbild für den schaltungstechnischen Aufbau des Alarmsystems. Es handelt sich dabei um an sich bekannte Glieder, deren Aufbau nicht im einzelnen beschrieben zu werden braucht. Der Einfachheit halber sind Bauelemente, wie Filter, Verstärker, ZF-Stufen usw. weggelassen. Im Signalfluß zwischen den einzelnen Blöcken der Fig. 3 ist durch kleine Buchstaben auf die Impulszüge der Fig. 4 und 5 hingewiesen. In der Fig. 4 sind diese Impulszüge über der Zeit aufgetragen. In einem Impulsgenerator werden Impulse a mit einer Impulswiederholfrequenz $f_r$ erzeugt. Mit diesen Impulsen wird ein HF-Sendeoszillator getastet. Dadurch werden kurze trägerfrequente HF-Schwingungsimpulse b jeweils mit der Impulsdauer $t_p$ der Antenne zugeleitet und dort abgestrahlt. Getrennte Sende- und Empfangsantennen sind hier im gewählten Beispiel vermieden und stattdessen über eine Richtungsweiche (Zirkulator) eine gemeinsame Antenne vorgesehen. Von den Zielen oder Hindernissen reflektierte Signale d werden von der Richtungsweiche dem Empfangsmischer zugeleitet. Im Empfangsmischer ist, wie oben schon angedeutet, ein Zeitfenster vorgesehen, das mit einer Verzögerung $t_v$ gegenüber dem ausgesandten Sendeimpuls öffnet.

Die Verzögerungszeit $t_v$ bis zum Öffnen des Zeitfensters muß mindestens die Dauer einer Impulsbreite $t_p$ aufweisen. Durch diese Forderung ist auch der Mindestradius für die Alarmzone A festgelegt. Die größtmögliche Verzögerungszeit $t_v$ und damit der Maximalradius der Alarmzone A ist durch die Pulswiederholperiode $1/f_r$ gegeben. Auch die Öffnungsdauer $t_o$ ist innerhalb der Zeiten der Pulsperiode $1/f_r$ einstellbar. Auf diese Weise ist ein getasteter Mischer gebildet. Für die Auswertung der Bewegtzielsignale nach dem Dopplerverfahren muß noch dem Empfangsmischer ein mit dem Sendepuls kohärentes Referenzsignal zugeführt werden.

Die oben beschriebene Bildung des Zeitfensters und die Zufuhr des Referenzsignals ist in der Fig. 3 nicht dargestellt, vielmehr ist dort eine wesentlich einfachere Ausführungsform gewählt. Hier wird nämlich die Verzögerungszeit $t_v$ nicht getrennt mit gesonderten aufwendigen Mitteln erzeugt, sondern es wird zwischen dem Sendeoszillator und der Richtungsweiche in einem Richtkoppler ein Teil des Sendesignals b ausgekoppelt und über ein Laufzeitglied dem Empfangsmischer als Überlagerungssignal zugeführt. Im Laufzeitglied (z. B. in einer Verzögerungsleitung) wird jeder Impuls um die festgelegte Zeit $t_v$ verzögert und gelangt dann als verzögerte aber sonst unveränderte Impulsreihe c zum Mischer. Die Ausbildung ist außerdem so getroffen, daß das Eintreffen der Impulszüge c im Mischer das Zeitfenster öffnet, wobei die Dauer der verzögerten Impulse, also die Impulsdauer $t_p$ die Öffnungsdauer des Zeitfensters bestimmt. Selbstverständlich sind auch bei dieser Ausführungsform die Länge $t_p$ der Impulse und die Verzögerungszeit $t_v$ wählbar oder einstellbar. Durch diese Art der Auskopplung von Sendesignalen und deren zwar verzögerte aber sonst unverzerrte Übertragung zum Mischer ergibt sich am Mischer von selbst ein Referenzsignal mit fester Frequenz- und Phasenbeziehung zum ausgesandten Sendeimpuls für die Dopplerauswertung. Im Empfangsmischer werden die verzögerten Impulse c den aufgenommenen Echosignalen d überlagert.

In Fig. 4 ist in den Impulszügen c, d und e deutlich das Ausblenden reflektierter Signale von Zielen oder Hindernissen außerhalb der Alarmzone aufgezeigt. Die verzögerten Impulse c öffnen, wie erwähnt, das Zeitfenster. Nur die ganz oder wenigstens teilweise in die Öffnungszeit $t_p$ fallenden empfangenen Echosignale $d_E$ (von einem Ziel E gemäß Fig. 2) ergeben ein Ausgangssignal e. Die Echoimpulse $d_X$ und $d_Y$ der Ziele X und Y im geschützten Bereich B oder in der Totzone T von Fig. 2 werden eindeutig ausgeblendet und somit werden diese Ziele nicht entdeckt. Die Reihe der hinter dem Empfangsmischer weitergeleiteten Impulse e hat die Pulsfolgefrequenz $f_r$ und kann zur Dopplerauswertung herangezogen werden, denn die empfangenen Signale des d-Zuges enthalten die Dopplerverschiebungen aufgrund der Bewegung der Ziele.

Das Ausgangssignal e des Empfangsmischers ist ein Impuls, dessen Breite der Koinzidenz von Empfangssignal d und Überlagerungssignal c entspricht. Die Höhe des Impulses ist proportional der Pulsamplitude des Empfangssignals d und dem Kosinus des trägerfrequenten Phasenwinkels von Empfangssignal d und Überlagerungssignal c. Zwischen empfangenem Signal d und verzögertem Signal c besteht, wie oben erwähnt, eine Phasenbeziehung. Stammt das empfangene Signal d von einem Festziel, so bleibt diese Phasenbeziehung erhalten, so daß eindeutig das Festziel als solches erkannt werden kann. Es stellt sich dabei ein bestimmter Gleichspannungswert für das Festziel ein. Stammt das empfangene Signal d jedoch von einem bewegten Ziel, z. B. von dem Eindringling E in Fig. 2, so ergibt sich eine zeitliche Änderung der Phasenlage, die der Dopplerfrequenz des bewegten Zieles E entspricht. Die hierbei am Ausgang des Mischers auftretende Wechselspannung mit Dopplerfrequenz ist daher von der von Festzielen herrührenden Gleichspannung leicht abzutrennen. Bei Bewegtzielen bildet die Hüllkurve der schwankenden Amplitudenwerte im Impulszug e die Dopplerfrequenz. Gemäß Fig. 3 werden daher die Impulszüge e einem Abtast- und Haltekreis mit nachfolgendem Tiefpass zugeführt. In der Fig. 5 zeigt der Impulszug e' die Folge der Ausgangssignale e des Mischers in einem anderen Zeitmaßstab, und zwar zeitlich gerafft. In der dargestellten Impulsfolge ist wieder die Periode $1/f_r$ angedeutet. Im Abtast- und Haltekreis wird aus dieser Impulsfolge in an sich bekannter Weise die Dopplerfrequenz g gebildet, die zur Signalauswertung verwendet wird. Für die Auslösung eines Alarmsignals können die Kriterien Dopplerfrequenz, Doppleramplitude und Dopplerperiodenzahl herangezogen werden und als Steuersignal auf Alarmeinrichtungen akustischer, optischer oder anderer Art gegeben werden. Die Dopplerfrequenz gibt z. B. einen Hinweis für die Geschwindigkeit, mit der sich der Eindringling nähert oder entfernt. Die Dopplerperiodenzahl ergibt ein Maß für die Größe des radial zurückgelegten Weges und die Doppleramplitude ergibt roh ein Maß für die Größe des entdeckten Bewegtzieles bzw. des Eindringlings. Mit Hilfe an sich bekannter zusätzlicher Einrichtungen kann das Vorzeichen der Dopplerverschiebung dazu ausgewählt werden, festzustellen, ob sich der Eindringling nähert oder entfernt. Für die Alarmauslösung kann z. B. überprüft werden, ob die Ausgangsgröße einen bestimmten einstellbaren Schwellwert überschreitet; dadurch kann z. B. die Zielgröße, die radiale Eindringtiefe oder Radialgeschwindigkeit einzeln oder in Kombination vorgegeben werden.

Durch die Periodizität der Sendesignale existieren neben der oben beschriebenen Alarmzone noch weitere quasi »harmonische« Alarmzonen, aus denen ebenfalls Echosignale während der Öffnungsdauer des Zeitfensters eintreffen können. Solche Echosignale sind dann nicht mehr eindeutig dem zeitverzögerten Signal im Mischer zugeordnet und führen zu Fehlalarmen. Diese Mehrdeutigkeit kann vermieden und weitgehend Eindeutigkeit der Alarmzonenbereiche hergestellt werden, indem für die ausgesandten Impulse eine Pulslagemodulation durchgeführt wird. Dabei ist die Zuordnung von verzögertem Impuls c zum zugehörigen Echosignal b stets gewahrt. Eine technische Möglichkeit hierfür ist in Fig. 3 durch den gestrichelt eingezeichneten Rauschgenerator angedeutet. Durch ihn wird eine zeitliche Modulation der Tastimpulse durchgeführt, d. h. eine statistische Verschiebung der ausgesandten Impulse zeitlich vorwärts bzw. rückwärts. Die gleiche zeitliche Verschiebung wie die ausgesandten Impulse b erfahren auch die ausgekoppelten, zeitverzögerten Impulse c. Für das Aussenden und das Empfangen reflektierter Signale aus dem Alarmzonenbereich sowie für die Zeitverzögerung hat diese statistische Verschiebung keine Bedeutung. Die Impulse werden genauso verarbeitet, wie oben beschrieben. Einen Einfluß übt die Pulslagemodulation lediglich bei Echosignalen aus unerwünschten Entfernungsbereichen aus. Bei diesen bewirkt die statistische Schwankung der Trägerphasenlage von Impuls zu Impuls eine Dekorrelation, die zu einem höherfrequenten und daher ausfilterbaren Störgeräusch führt.

Das erfindungsgemäße Alarmsystem ist nicht nur an die Gegebenheiten anpaßbar, bezüglich der radialen Entfernung und der Tiefe der Alarmzone, sondern es ist auch in anderer Hinsicht in vielfältiger Form abwandelbar. Einige Möglichkeiten hierzu sind nachstehend aufgeführt.

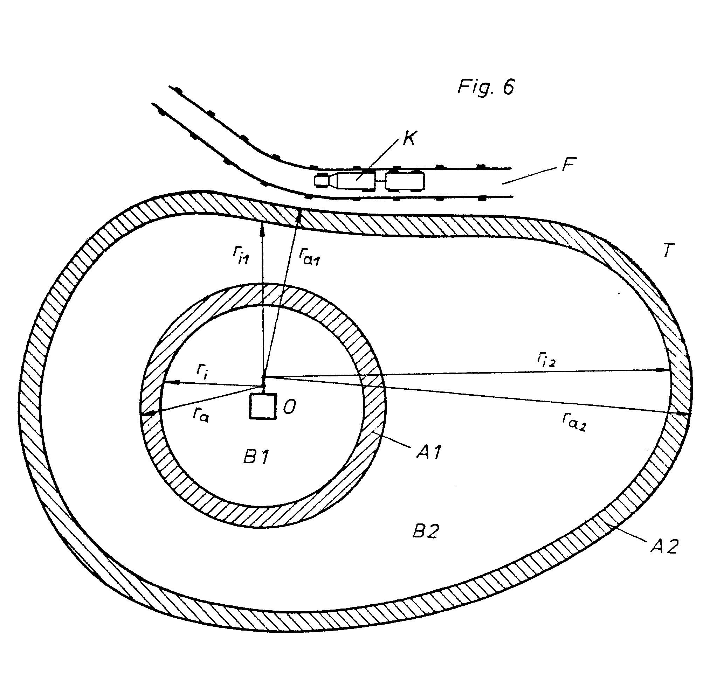

Anhand der Fig. 6 soll eine Abwandlung des Alarmsystems im Prinzip erläutert werden. Hier sind wieder ringförmig geschlossene Alarmzonen angenommen und analog zu Fig. 1 ist das zu schützende Objekt O von einer Alarmzone A1 umschlossen. Innerhalb der Alarmzone A1 befindet sich der gesicherte Bereich B1. Durch zusätzliche Verwendung eines weiteren Zeitfensters mit einer anderen Verzögerungszeit $t_v$ und durch empfangsseitige Parallelauswertung der Echosignale lassen sich mehrere gestaffelt ineinanderliegende Alarmzonen A1 und A2 bilden. Bei Verwendung von Antennen mit Rundstrahlcharakteristik und Anordnung der zugehörigen Sensoren an gleicher zentraler Stelle ergeben sich etwa Alarmzonen als konzentrische Kreisringe. Dieser Fall ist in der Fig. 6 nicht ausdrücklich eingezeichnet, sondern es ist darin bereits eine weitere Abwandlung enthalten.

In der Fig. 6 ist anhand der äußeren Alarmzone A2 aufgezeigt, daß die Alarmzone nicht immer Kreis- oder Kreissegmentform haben muß, sondern daß die Form durchaus anders gestaltet und an die jeweiligen Erfordernisse angepaßt sein kann. Als einfaches Beispiel sei angeführt, daß eine Alarmzone A statt Kreisform auch Ellipsenform aufweisen kann. Hier im Beispiel der Fig. 6 ist angenommen, daß ein Fahrweg F verhältnismäßig dicht am zu schützenden Objekt O vorbeiführt und daß die auf diesem Fahrweg F fahrenden Kraftwagen K nicht erfaßt werden und keinen Fehlalarm auslösen sollen, wogegen etwa parallel zum Fahrweg F nach rechts der zu schützende Bereich B2 sich wesentlich weiter erstrecken soll. Es ist also hier in Fig. 6 keine einfache geometrische Form für die Alarmzone A2 angenommen. Die radiale Entfernung der Alarmzone A2 vom Sensor bzw. zu schützenden Objekt O soll zwischen den Minimalentfernungen $r_{a1}$ bzw. $r_{i1}$ und den Maximalentfernungen $r_{a2}$ bzw. $r_{i2}$ schwanken. Eine derartige Form der Alarmzone A2 ist dadurch zu erreichen, daß z. B. eine rotierende Richtantenne eingesetzt und die Verzögerungszeit $t_v$ während der Rotation verändert wird. Eine solche stetig gesteuerte Veränderung der Verzögerungszeit ist ohne Schwierigkeit programmierbar. Das Prinzip der Steuerung der Verzögerungszeit ist selbstverständlich nicht nur bei mehreren gestaffelt ineinander angeordneten Alarmzonen gemäß Fig. 6, sondern ganz allgemein anwendbar.

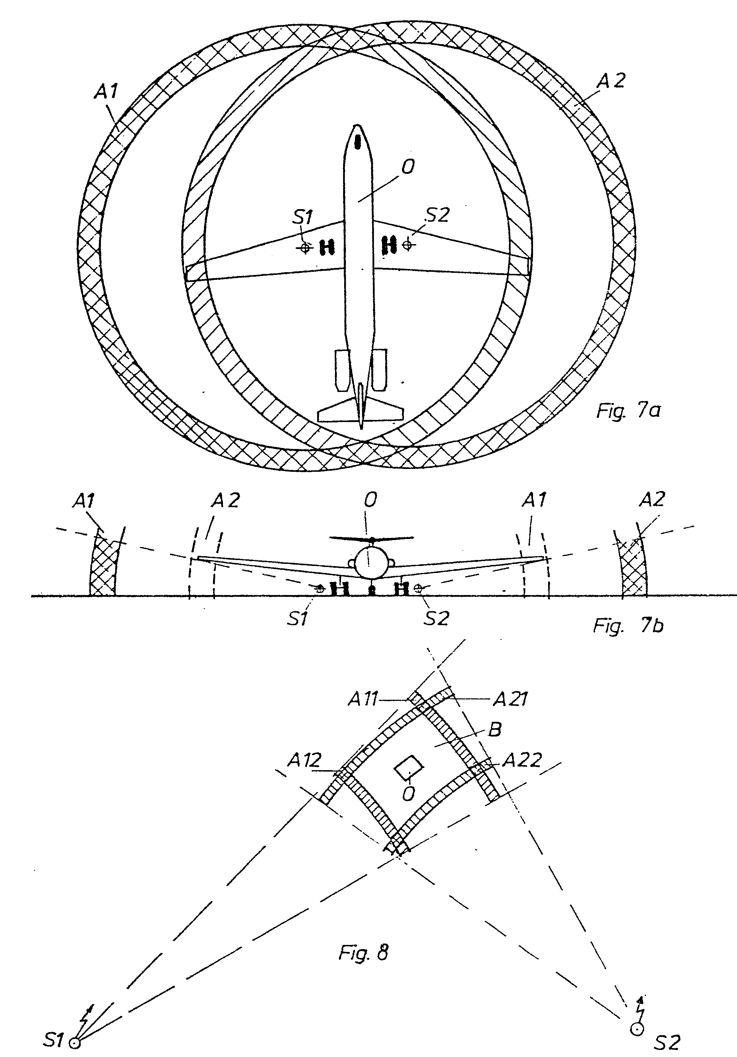

Die Fig. 7a und 7b zeigen eine weitere Möglichkeit für die Abwandlung des Alarmsystems. Als zu schützendes Objekt O ist hier ein Flugzeug angenommen. Auch hier ist es prinzipiell möglich, analog zu Fig. 2 (wo der Sensor S auf dem zu schützenden Objekt O — sei es ein Haus oder ein Fahrzeug — angeordnet ist) den Sensor hoch neben oder über dem Flugzeug, etwa am Leitwerk, anzuordnen. Da aber das Anbringen hochragender Antennen nicht immer leicht durchführbar ist, wird hier ein leichter durchzuführender Vorschlag gemacht. Ein Sensor S1, der z. B. als tragbares Gerät ausgebildet sein kann, wird etwa unter dem Flugzeug am Boden angeordnet und erzeugt eine etwa ringförmige Alarmzone A1, wobei allerdings durch manche Flugzeugteile (z. B. durch die dick eingezeichneten Fahrwerksteile) eine Abschattung der freien Abstrahlung verursacht wird. Aus diesem Grunde kann auf der anderen Flugzeugseite ein zweiter Sensor S2 angeordnet werden, der seinerseits eine Alarmzone A2 erzeugt. Die beiden an sich kreisförmigen Alarmzonen A1 und A2 überschneiden sich und bilden nach außen die doppelt schraffierte Form einer »8«. Die innen verlaufenden Bögen der Alarmzonen sind durch einfache Schraffur gekennzeichnet und teilweise abgeschattet; sie sind für die Wirkungsweise nach außen nicht maßgebend. Anstatt, wie hier gezeigt, die »8« aus zwei sich überlagernden Vollkreisen zu bilden, können auch durch Verwendung von Antennen mit entsprechendem Öffnungswinkel zwei Kreisbögen verwendet werden, die sich zur »8« ergänzen.

Die hier aufgezeigte Anordnung von zwei getrennten Sensoren kann ganz allgemein eingesetzt werden, indem auch bei anderen, die freie Abstrahlung teilweise abschattenden Objekten auf verschiedenen Seiten des Objektes jeweils ein getrennter Sensor angeordnet wird, der in den vom Objekt abgewandten freien Raum abstrahlt. Die Anordnung ist nicht nur auf zwei entgegengesetzt liegende Seiten beschränkt, sondern ist auch bei drei oder mehr Seiten mit einer entsprechenden Anzahl von Sensoren anwendbar. Die einzelnen Sensoren arbeiten dabei vorteilhafterweise im Zeitmultiplexbetrieb. Ferner brauchen die Sensoren nicht alle auf den gleichen Entfernungsbereich eingestellt zu sein, vielmehr ist nur wesentlich, daß die gebildeten Alarmzonen der einzelnen Sensoren sich zu einer geschlossenen Außenzone, gleichgültig welcher Form oder welchen Grundrissen auch immer, schließen.

Die Fig. 8 schließlich zeigt, aufbauend auf der Fig. 6, eine weitere Möglichkeit zur Bildung rundum geschlossener Überwachungsbereiche. Hier soll ein einzeln stehendes zu schützendes Objekt O von entfernt liegenden ortsfesten Sensoren S1 und S2 aus durch sektorartige Abstrahlung der Sendeenergie überwacht werden. Das zu schützende Objekt O liegt hier im Zwischenraum zwischen zwei konzentrischen segmentartigen Alarmzonen. Die beiden vom Sensor S1 erzeugten Alarmzonen A11 und A12 sowie die vom Sensor S2 gebildeten Alarmzonen A21 und A22 schneiden sich an vier Stellen und schließen mit den zwischen den Schnittstellen liegenden Abschnitten der vier Alarmzonen das Objekt O vollständig ein. In jedem der vier Abschnitte bzw. Segmente aus den Alarmzonen A11 bis A22 würde ein etwaiger Eindringling erfaßt und es dadurch zum Alarm kommen. Diese Ausbildung hat den Vorteil, daß hier auch von entfernt liegenden Stellen aus um das Objekt O herum ein gegen Eindringlinge gesicherter Bereich B gebildet wird, in dem sich Berechtigte ungehindert bewegen können.

In den Fällen, wo die Antenne erhöht aufgestellt werden muß, um die Alarmzone ohne Abschattung voll auszuleuchten, kann man das Vertikalstrahlungsdiagramm der Antenne der erforderlichen Neigung anpassen.

Ergänzend sei noch erwähnt, daß die Sensoren nicht nur ortsfest installiert oder tragbar ausgebildet sein können, sondern daß sie ebenso gut in einem zu schützenden Fahrzeug untergebracht sein können, so daß etwa im Falle des Flugzeugs in Fig. 7 nur die Antennen aufgestellt oder ausgefahren und das System eingeschaltet werden muß.

**Patentansprüche**

1. Alarmsystem zur Feststellung des Eindringens eines sich bewegenden Objektes in den Umgebungsbereich eines zu schützenden Objektes, mit einem gepulste elektromagnetische Wellensignale abstrahlenden Sender und einem Empfänger zur Aufnahme der vom eindringenden Objekt reflektierten elektromagnetischen Energie, mit einem gegenüber den Sendeimpulsen zeitverzögerten Zeitfenster und Auswertung der vom Zeitfenster durchgelassenen Bewegtzielsignale zwecks Bildung einer im gewünschten Entfernungsbereich schalenförmig das zu schützende Objekt umgebenden, radial begrenzten Alarmzone, wobei die Tiefe der Alarmzone gering ist im Vergleich zum Entfernungsbereich, dadurch gekennzeichnet, daß die Ermittlung des von einem Eindringling innerhalb der Alarmzone (A) tatsächlich zurückgelegten Radialweges aus der Differenz der Zahlenwerte von aufsummierten positiven und negativen Dopplersignalperioden der reflektierten Bewegtzielsignale ($d_E$) erfolgt.

2. Alarmsystem nach Anspruch 1, gekennzeichnet durch Verwendung einer Antenne mit Rundstrahlcharakteristik und Bildung einer kugelschalenartigen Alarmzone (A).

3. Alarmsystem nach Anspruch 1 oder 2, gekennzeichnet durch eine seitliche Begrenzung und/oder Höhenbegrenzung der Alarmzone (A) durch Wahl der Antennencharakteristik (z. B. Richtantenne).

4. Alarmsystem nach einem der Ansprüche 1 bis 3, gekennzeichnet durch die Bildung gestaffelt ineinanderliegender Alarmzonen (A1, A2 in Fig. 7) durch empfangsseitige Parallelauswertung der reflektierten Signale mit unterschiedlicher Verzögerungszeit ($t_v$).

5. Alarmsystem nach einem der Ansprüche 1 bis 4, dadurch gekennzeichnet, daß die Form der Alarmzone (z. B. A2 in Fig. 7) durch programmierbare Steuerung der Verzögerungszeit ($t_v$) des Zeitfensters für die zugeordneten Abstrahlrichtungen der Antenne einstellbar ist.

6. Alarmsystem nach Anspruch 5, gekennzeichnet durch Verwendung einer rotierenden Richtantenne.

7. Alarmsystem nach Anspruch 5, gekennzeichnet durch die Verwendung mehrerer umschaltbarer Richtantennen.

8. Alarmsystem nach einem der Ansprüche 1 bis 7, gekennzeichnet durch einen Abtast- und Haltekreis am Empfangsmischer zur Bildung der vom Bewegtziel reflektierten dopplerverschobenen Signale.

9. Alarmsystem nach Anspruch 4, gekennzeichnet durch die Bildung eines allseitig geschlossenen Sicherheitsbereiches (B) durch zwei räumlich voneinander getrennte Sende-Empfangsanlagen (S1, S2), mit je zwei gestaffelt ineinanderliegenden Alarmzonen (A11, A12; A21, A22), wobei sich die Alarmzonen der beiden Sende-Empfangsanlagen schneiden und das zu schützende Objekt (O) zwischen den von den Schnittpunkten begrenzten Zonenabschnitten angeordnet ist.

10. Alarmsystem nach einem der Ansprüche 1 bis 3, dadurch gekennzeichnet, daß wenigstens auf zwei verschiedenen Seiten eines die freie Abstrahlung teilweise abschattenden Objektes (O) jeweils ein getrennter Sensor (S1, S2 in Fig. 7) aufgestellt ist und die nicht abgeschatteten Bereiche der den Sensoren zugeordneten Alarmzonen (A1, A2 in Fig. 7) sich überschneiden.

11. Alarmsystem nach Anspruch 10, dadurch gekennzeichnet, daß die getrennten Sensoren (S1, S2 in Fig. 7) im Zeitmultiplexbetrieb arbeiten.

12. Alarmsystem nach einem der Ansprüche 1 bis 11, gekennzeichnet durch Verwendung eines Laufzeitgliedes (Verzögerungsleitung) zwischen Sender und Empfangsmischer.

13. Alarmsystem nach einem der Ansprüche 1 bis 12, gekennzeichnet durch Pulslagemodulation der Sendesignale.

14. Alarmsystem nach Anspruch 13, gekennzeichnet durch Pulslagemodulation der Sendesignale mittels Rauschgenerator oder Quasi-Rauschgenerator.

## Claims

1. Alarm system for determining the intrusion of a moving object into the surroundings of an object to be protected, with a transmitter means for radiating pulsed electromagnetic wave signals and a receiver means for detecting electromagnetic energy reflected from the intruding object, with a range gate which is time-delayed with respect to the transmitted pulses and analysis of the moving target signals passed by the range gate, for the purpose of forming a radial limited alarm zone in the desired distance bracket surrounding the object to be protected in the manner of shells, whereby the depth of the alarm zone is small compared with the distance of the alarm zone, characterized by determining the radial path covered by the intruder within the alarm zone from the difference of the numerical values of added positive and negative Doppler periods of the reflected moving target signals ($d_E$).

2. Alarm system according to claim 1 characterized by the use of an antenna with omnidirectional characteristics and by forming an alarm zone (A) in the shape of spherical shells.

3. Alarm system according to claim 1 or 2 characterized by an azimuthal limit and/or an elevational limit of the alarm zone by selecting the antenna characteristics (i. e. directional antenna).

4. Alarm system according to one of the claims 1 to 3 characterized by forming staggered alarm zones lying one within the other (A1, A2 in Fig. 7) by analysis in parallel at the receiver side of the reflected signals with different delay times ($t_v$).

5. Alarm system according to one of the claims 1 to 4 characterized in that the shape of the alarm zone (i. e. A2 in Fig. 7) can be adjusted by means programmably controlling the delay time ($t_v$) of the range gate for the associated directions of radiation of the antenna.

6. Alarm system according to claim 5 characterized by using a rotatable directional antenna.

7. Alarm system according to claim 5 characterized by using several switch-over directional antennas.

8. Alarm system according to one of the claims 1 — 7 characterized by a sampling and holding circuit means at the receiver mixer for the purpose of forming the Doppler-shifted signals reflected from the moving target.

9. Alarm system according to claim 4 characterized by forming a panoramically closed security region (B) by two spatially separate transmit-receive means (S1, S2) each with two staggered alarm zones (A11, A12; A21, A22) lying one within the other, the alarm zones of the two transmit-receive means intersecting and the object (O) to be protected being located between the zone segments bounded by the points of intersection.

10. Alarm system according to one of the claims 1 to 3 characterized in that one separate sensor means (S1, S2 in Fig. 7) in each case is arranged on at least two different sides of an object (O) casting an shadow of the free radiation and in that the regions of the alarm zones (A1, A2 in Fig. 7) associated with the sensors and not shadowed intersect each other.

11. Alarm system according to claim 10 characterized in that the separate sensor means (S1, S2 in Fig. 7) operate in the time multiplex mode.

12. Alarm system according to one of the claims 1 to 11 characterized by the use of a time-delay means (delay line) between transmitter and receiver mixer.

13. Alarm system according to one of the claims 1 to 12 characterized by means for pulse-position modulating the transmitted signals.

14. Alarm system according to claim 13 characterized by pulse-position modulating the transmitted signals by means of a noise generator or a pseudo random-noise generator.

## Revendications

1. Système d'alarme pour détecter l'intrusion d'un objet en mouvement dans le voisinage d'un objectif à protéger, comprenant un émetteur de signaux pulsés d'ondes électromagnétiques et un récepteur pour capter l'énergie électromagnétique réfléchie par l'intrus comprenant une fenêtre de temps retardée dans le temps par rapport aux impulsions émises pour former une plage d'éloignement détectable et une exploitation des signaux des cibles mobiles admis par la fenêtre de temps, caractérisé par le fait qu'une zone d'alarme (A) est créée en forme de coupole dans la plage d'éloignement voulue, entourant l'objet à protéger (O) et que le chemin radial parcouru dans la zone d'alarme (A) par un intrus est fourni par la mesure du nombre de périodes Doppler des signaux-cibles en mouvement réfléchis ($d_E$).

2. Système d'alarme selon la revendication 1, caractérisé par l'utilisation d'une antenne à caractéristique d'émission circulaire et la création d'une zone d'alarme (A) en forme de coupole sphérique.

3. Système d'alarme selon la revendication 1 ou 2, caractérisé par une limitation latérale et/ou une limitation en hauteur de la zone d'alarme (A) par le choix de la caractéristique d'antenne (par exemple antenne tournante).

4. Système d'alarme selon l'une des revendications 1 à 3, caractérisé par la formation de zones d'alamre échelonnées disposées l'une à l'intérieur de l'autre ($A_1$, $A_2$ sur la figure 7) par l'exploitation parallèle à la réception des signaux réfléchis avec des temps de retard ($t_v$) différents.

5. Système d'alarme selon l'une quelconque des revendications 1 à 4, caractérisé par le fait que la forme de la zone d'alarme (par exemple $A_2$ sur la figure 7) est réglable par une commande programmable du temps de retard ($t_v$) de la fenêtre de temps suivant les directions d'émission de l'antenne.

6. Système d'alarme selon la revendication 5, caractérisé par l'utilisation d'une antenne tournante.

7. Système d'alarme selon la revendication 5, caractérisé par l'utilisation de plusieurs antennes tournantes commutables.

8. Système d'alarme selon l'une quelconque des revendications 1 à 7, caractérisé par un circuit de balayage et blocage au mélangeur de réception pour créer les signaux à décalage Doppler réfléchis par la cible mobile.

9. Système d'alarme selon la revendication 4, caractérisé par la formation d'un périmètre de sécurité (B) fermé de tous côtés par deux installations séparés émetteur-récepteur ($S_1$ et $S_2$) séparées dans l'espace avec chacune deux zones d'alarme ($A_{11}$, $A_{12}$; $A_{21}$, $A_{22}$) échelonnées disposées l'une à l'intérieur de l'autre, cependant que les zones d'alarme des deux installations émetteur-récepteur se recoupent et que l'objet à protéger (O) est placé entre les segments de zones limités par les points d'intersection.

10. Système d'alarme selon l'une quelconque des revendications 1 à 3, caractérisé par le fait qu'un émetteur-récepteur séparé ($S_1$, $S_2$ sur la figure 7) est chaque fois disposé au moins sur deux côtés distincts d'un objet (O) masquant partiellement le rayonnement libre, et que les périmètres non masqués des zones d'alarme ($A_1$, $A_2$ sur la figure 7) associées aux émetteurs-récepteurs se recoupent.

11. Système d'alarme selon la revendication 10, caractérisé par le fait que les émetteurs-récepteurs séparés ($S_1$, $S_2$ sur la figure 7) travaillent en multiplex dans le temps.

12. Système d'alarme selon l'une quelconque des revendication 1 à 11, caractérisé par l'utilisation d'un élément temporisateur (ligne de retardement) entre l'émetteur et le mélangeur de réception.

13. Système d'alarme selon l'une quelconque des revendications 1 à 12, caractérisé par une modulation d'impulsions en position des signaux émis.

14. Système d'alarme selon la revendication 13, caractérisé par une modulation d'impulsions en position des signaux émis au moyen de générateurs de bruits ou de générateurs de quasi-bruits.

*Fig. 1*

*Fig. 2*

Fig. 3

0 023 625

0 023 625

Fig. 4

Fig. 5

15

Fig. 6

Fig. 7a

Fig. 7b

Fig. 8